# FASCICULE DE BREVET EUROPEEN

(11) **EP 2 050 099 B1**
(45) Date de publication et mention de la délivrance du brevet: **05.03.2014**
(21) Numéro de dépôt: 07823417.6
(22) Date de dépôt: 10.08.2007
(51) Int. Cl.: G21F 9/10, C01F 13/00

(54) **METHODE DE STABILISATION DU RADIUM DANS LES DECHETS OU DANS LES EFFLUENTS SOLIDES COMPORTANT DES MATIERES EN SUSPENSION**
VERFAHREN ZUR STABILISIERUNG VON RADIUM IN ABFALLSTOFFEN ODER IN ABWÄSSERN MIT FESTSTOFFSUSPENSIONEN
METHOD OF RADIUM STABILIZATION IN SOLID EFFLUENT OR EFFLUENT CONTAINING SUBSTANCES IN SUSPENSION

(30) Priorité: 11.08.2006 FR 0607295
(43) Date de publication de la demande: 22.04.2009
(73) Titulaire: Compagnie Européenne du Zirconium - CEZUS, 92400 Courbevoie (FR)
(72) Inventeur: VAYR, Denis, F-38770 Monteynard (FR)
(74) Mandataire: Jacobson, Claude
(86) Numéro de dépôt international: PCT/FR2007/001365
(87) Numéro de publication internationale: WO 2008/017764

(56) Documents cités:
- DE-A1- 4 241 559
- DE-A1- 4 322 663
- DE-A1- 10 005 240
- FR-A1- 2 562 312
- US-A- 4 423 007

## Description

La présente invention est relative à une méthode permettant de stabiliser le radium contenu dans des effluents radifères solides ou comportant des matières en suspension. L'invention a notamment pour vocation à s'appliquer au traitement d'effluents provenant du traitement de minerais uranifères et d'effluents provenant de la chimie ou de la métallurgie du zirconium. La présente invention a également pour objet un procédé de stabilisation du radium de ces effluents.

Par effluents radifères solides ou comportant des matières en suspension au sens de l'invention, on entend différents types d'effluents susceptibles de contenir des teneurs variées en radium. Il peut s'agir d'effluents liquides, d'effluents semi-solides ou boues radifères ou encore d'effluents solides ou déchets radifères (e.g. se présentant sous forme de particules, de granulats, de gâteau, etc.).

La teneur et la composition des matières solides constitutives des effluents solides ou des matières en suspension des effluents liquides, semi-solides ou boues radifères sont variables mais elles comportent des sels et oxydes de métaux autres que le radium, susceptibles d'être solubilisés en fonction du pH.

Selon l'invention on entend par effluents liquides, des effluents comprenant de 5 à 70 g/L, plus particulièrement de 5 à 50 g/L de matière en suspension, par effluents semi-solides ou boues radifères des effluents comportant de 70 à 300 g/L, plus particulièrement de 150 à 300 g/L, de matière en suspension, les effluents solides ou déchets radifères étant caractérisés par une teneur en liquide, eau ou solvant, très faible ou nulle.

Des radioéléments, le radium est l'un de ceux dont les normes de rejet sont les plus sévères. De nombreux effluents issus de l'extraction de minerais ou du traitement de matières minérales sont susceptibles de contenir du radium. C'est ainsi le cas des minerais uranifères. C'est également le cas des effluents liquides et semi-solides qui sont issus des dissolutions et des différents lavages des matériels de carbochloration du zircon et des différents procédés de séparation du zirconium et du hafnium, par exemple la séparation du tétrachlorure de zirconium et du tétrachlorure de hafnium par les techniques par distillation en sels fondus et par extraction liquide-liquide (MIBK, HCNS), effluents dans lesquels une très faible quantité de radium est généralement présente.

Le radium a l'inconvénient d'être soluble dans l'eau et d'être très aisément lixiviable ce qui rend difficile son stockage dans un effluent solide ou semi-solide (boue) déposé en décharge.

On connait, par exemple de US4423007, DE1005240 ou FR2562312 des procédés de décontamination en radium ou d'élimination du radium d'effluents liquides, par précipitation dudit radium sous forme de sulfate double de radium et de barium, Ba(Ra)SO₄. Ces procédés sont effectués sur des eaux ou des effluents liquides obtenus après élimination des matières en suspension, par exemple par filtration.

L'invention a pour objectif de proposer une méthode permettant de stabiliser le radium contenu dans des effluents radifères solides ou comportant des matières en suspension.

Un autre objectif de l'invention est de proposer une telle méthode permettant la stabilisation du radium contenu en très faible quantité dans un tel effluent, notamment dans un effluent liquide ou semi-solide. La notion de très faible quantité s'entend d'une teneur en radium inférieure ou égale à 1000 Bq par litre ou par kilogramme d'effluent radifère, notamment inférieure ou égale à 600 Bq/l ou kg d'effluent radifère.

Un autre objectif de l'invention est de proposer une telle méthode permettant la stabilisation du radium contenu en quantités plus importantes dans un effluent, notamment dans un effluent semi-solide ou des déchets radifères. La notion de quantité plus importante s'entend d'une teneur en radium supérieure à 1 000 Bq/kg ou l est pouvant atteindre 1 000 Bq/g ou ml, notamment 600 Bq/g ou ml d'effluent radifère.

Un autre objectif de l'invention est de fournir une méthode permettant d'obtenir un radium stabilisé non ou très peu lixiviable, et de pouvoir stocker ce radium sous forme stabilisée dans un sous-produit solide ou semi-solide, peu ou pas sujet à la lixiviabilité.

Un autre objectif encore de l'invention est de proposer une méthode bénéfique dans un contexte de développement durable et adaptée à un traitement en continu des effluents solides ou comportant des matières en suspension issus d'un procédé industriel.

Ces objectifs sont atteints par la présente invention qui a pour objet une méthode de stabilisation du radium présent dans un effluent radifère solide ou comportant des matières en suspension, dans laquelle on procède au mélange de l'effluent et d'un chlorure de métal, puis on fait réagir le mélange précédemment obtenu avec un ion sulfate, pour l'obtention d'un effluent contenant du radium stabilisé.

Suivant une caractéristique de l'invention, l'effluent radifère liquide comprend de 5 à 70 g/L, plus particulièrement de 5 à 50 g/L de matière en suspension.

Suivant une autre caractéristique de l'invention l'effluent semi-solide ou boue radifère comporte de 70 à 300 g/L, plus particulièrement de 150 à 300 g/L, de matière en suspension.

Suivant une autre caractéristique de l'invention l'effluent radifère est solide.

Suivant une caractéristique de l'invention la méthode ne comporte pas d'étape d'élimination des particules solides avant de procéder au mélange avec un chlorure de métal.

Suivant une caractéristique de l'invention, le chlorure est un chlorure de baryum, de strontium ou de plomb. Il peut également s'agir d'un mélange de deux ou des trois chlorures précités. Selon un mode de réalisation préféré de l'invention, le chlorure est, ou comprend, un chlorure de baryum.

Suivant une caractéristique de l'invention, la méthode selon l'invention conduit à la formation d'un sulfate double (c'est-à-dire d'un sulfate du radium et du métal issu du chlorure de métal). Suivant un mode de réalisation, l'utilisation de chlorure de baryum et de l'ion sulfate conduit à la formation du sulfate double Ba(Ra)SO₄, insoluble.

Par stabilisation, on entend donc rendre le radium insoluble dans l'eau et les effluents aqueux par précipitation. On entend également une « fixation » ou un emprisonnement dudit sulfate double insoluble dans les matières en suspension des effluents.

On conduit avantageusement la méthode avec un excès de chlorure de métal et d'ion sulfate par rapport au radium ce qui signifie que l'on fait en sorte que plus d'une molécule de métal et plus d'une molécule d'ion sulfate soient présentes pour un atome de radium.

Suivant une caractéristique de l'invention, le rapport molaire entre le chlorure de métal (soit l'ion métallique) et l'ion sulfate est voisin de 1.

Les ions sulfates peuvent être apportés (i) sous forme d'ions, (2i) par l'intermédiaire d'un générateur d'ion sulfate capable de générer un ou des ions sulfate dans le mélange, ou encore (3i) par un mélange de ces deux espèces, en toutes proportions.

Selon un mode de réalisation préféré, l'ion sulfate est apporté par l'addition d'acide sulfurique ou d'anhydride sulfurique.

En variante, l'ion sulfate peut être apporté par l'addition d'un sulfate soluble ou d'un sel de sulfate soluble, et par exemple Na₂SO₄.

Suivant une caractéristique de l'invention, l'ion sulfate est apporté par une solution aqueuse d'acide sulfurique de concentration comprise entre 20 et 50% en poids.

En variante la solution aqueuse d'acide sulfurique a une concentration supérieure ou égale à 90% en poids.

Un mélange homogène de l'effluent et du chlorure de métal, puis avec l'ion sulfate, permet de piéger le maximum de radium présent. L'homme du métier dispose des compétences nécessaires pour déterminer les moyens d'agitation permettant d'assurer un tel mélange homogène en fonction de chaque situation : nature de l'effluent (liquide, semi-solide, solide), concentration en radium, volume ou masse d'effluent à traiter, dimensions de la cuve de traitement, norme de rejet, etc.

L'effluent contenant du radium stabilisé peut être traité pour séparer la partie liquide de l'effluent de la partie solide comprenant le radium stabilisé. Il est possible de procéder par floculation, filtration ou floculation et filtration. Optionnellement, le pH de l'effluent est ajusté en vue de l'étape de floculation, en fonction du floculant ou de l'adjuvant de floculation.

Suivant une caractéristique de l'invention l'effluent contenant du radium stabilisé est ainsi neutralisé après la formation du sulfate double de métal et de radium. Cette neutralisation peut être effectuée notamment à l'aide de soude, de potasse ou d'un produit analogue. Suivant un mode de réalisation, on neutralise l'effluent à l'aide d'une solution de soude de concentration comprise entre 10 et 50%. La neutralisation vise à ramener le pH à une valeur avantageusement comprise entre 7 et 10 et de préférence entre 8 et 9.

Cette neutralisation peut avantageusement provoquer la précipitation ou reprécipitation de certains ou de la totalité des autres métaux présents dans l'effluent et éviter la mise en solution de certains oxydes comme les oxydes d'uranium susceptibles d'être présents dans des effluents radifères, sous forme de sulfates solubles.

Suivant une caractéristique de l'invention, on réalise une floculation de l'effluent optionnellement neutralisé, par ajout d'un agent floculant. L'homme du métier a à sa disposition toute une gamme de floculants, notamment ceux utilisés dans le traitement des eaux. Parmi eux on peut citer notamment les floculants polyacrylamides. A titre de tel agent floculant, on peut utiliser par exemple le FLOPAM^{®} AN 934 MPM ou BPM de la société SNF, le PROSEDIM AS25 de la société NALCO.

Le floculat issu de l'étape précédente peut ensuite être traité pour recueillir d'un côté un résidu solide ou semi-solide contenant le radium stabilisé et de l'autre la phase liquide de l'effluent, dépourvue ou appauvrie en radium. Des étapes de décantation, filtration ou décantation et filtration sont des moyens de mise en oeuvre de cette phase du procédé. A titre d'exemple, le floculat est soit (i) décanté, soit (2i) filtré, soit (3i) décanté, puis le résidu obtenu filtré. La filtration peut être réalisée sur tout filtre industriel adapté tel que filtre-presse ou filtre-rotatif.

Suivant une variante de l'invention, l'effluent est au préalable soumis à une désintégration, notamment à un traitement aux ultrasons. Ce traitement est destiné à désintégrer les particules solides en suspension dans l'effluent ou le solide constitutif de l'effluent qui sont susceptibles d'emprisonner du radium, comme par exemple des particules de zircon lorsque les effluents radifères solides ou comportant des matières en suspension sont des déchets de carbochloration. Il peut intervenir avant le mélange avec le chlorure ou avant le mélange avec l'ion sulfate ou le générateur d'ion sulfate.

La méthode selon l'invention trouve application dans le traitement de tout effluent liquide ou semi-solide (e.g. boue) ou solide (e.g. particules, gâteau) susceptible de contenir du radium. Les conditions de mise en oeuvre, par exemple ratio métal/radium, ratio ion sulfate/radium, dimensionnement des cuves, temps de séjour, capacités d'agitation, prétraitement par ultra-sons ou autre méthode de désintégration des particules contenant du radium, permettent de traiter efficacement des déchets radifères comportant des matières en suspension quelle que soit leur teneur en radium, depuis le radium à l'état de trace, ou de très faible quantité, par exemple à partir de 0,1 Bq/l ou kg d'effluent jusqu'aux teneurs les plus élevées rencontrées dans des effluents nécessitant d'être traités. De manière avantageuse, le procédé peut donc s'adapter facilement aux normes de rejet en vigueur. La méthode trouve notamment application dans le traitement des effluents issus de l'industrie nucléaire et tout particulièrement dans le traitement d'effluents produits au cours de la métallurgie du zirconium, des phases de préparation de l'éponge de zirconium et des opérations de séparation zirconium/hafnium. Par définition, on regroupe sous l'appellation « métallurgie du zirconium » toutes les opérations classiques appliquées au minerai de zirconium et aux métaux valorisables qu'il contient, principalement zirconium et hafnium.

Ainsi, l'effluent peut être issu :
- des dissolutions ou des lavages des matériels employés lors de la carbochloration du minerai de zirconium,
- des boues issues de ce procédé de carbochloration,
- des dissolutions ou des lavages des matériels employés lors du procédé d'extraction et de séparation du zirconium ou de l'hafnium,
- des boues issues de ce procédé d'extraction et de séparation du zirconium ou de l'hafnium, ou
- d'un mélange d'un ou plusieurs de ces effluents.

A titre d'exemple des compositions moyennes typiques d'effluents radifères solides ou comportant des matières en suspension sont données ci-après :

### - Déchets de carbochloration :

| | |
|---|---|
| - C | de 30 à 60% |
| - Zr | de 10 à 30% |
| - Si | de 1 à 20% |
| - Hf | de 0 à 1% |
| - Al | de 0 à 1% |
| - Ca | de 0 à 0,5% |
| - Fe | de 1 à 3% |
| - Cr | de 0 à 0,1% |
| - K | de 0 à 0,2% |
| - Ni | de 0 à 0,1% |
| - U | de 0,5 à 3% |
| - Y | de 0 à 3% |
| - Th | de 0 à 0,5% |

Tous ces éléments sont non solubles lors de la mise en suspension.

### - Effluents des ateliers de carbochloration et du procédé de Séparation Zr/Hf et eaux de traitement des gaz de ces ateliers :

Ces effluents peuvent contenir également les éléments de dissolution du solvant minéral du procédé de Séparation, sachant que cette dissolution peut être préalablement neutralisée avant de rejoindre les effluents de lavages des deux ateliers.

Le mélange très variable comprend :

| | | |
|---|---|---|
| - C | de 1 à 15% | insoluble |
| - Si | de 1 à 10% | insoluble (SiO2) |
| - Al | de 5 à 40% | en partie soluble suivant pH |
| - Zr | de 1 à 8% | en partie soluble suivant pH |
| - Fe | de 0,5 à 2% | en partie soluble suivant pH |
| - Hf | de 0,5 à 3% | en partie soluble suivant pH |
| - Ca | de 1 à 4% | en partie soluble suivant pH |
| - K | de 1 à 30% | totalement en solution |

Les éléments radioactifs sont en faible quantité (U<0,1 %).

Un avantage de la présente invention est que la méthode peut être utilisée pour traiter en continu les effluents et déchets issus d'un procédé industriel, par exemple les effluents produits au cours de la chimie ou de la métallurgie du zirconium et en particulier les effluents particuliers qui viennent d'être décrits. Il est intéressant de pouvoir disposer de plusieurs fosses ou cuves dans lesquelles les effluents provenant d'une activité industrielle ou des effluents provenant de plusieurs activités industrielles peuvent être stockés jusqu'à l'obtention du volume désiré pour débuter le traitement. Plusieurs cuves ou fosses peuvent ainsi être disposées en parallèle, de manière que lorsque le traitement des effluents commence dans l'une de ces fosses ou cuves, les effluents qui continuent d'être produits puissent être acheminés vers une autre fosse ou cuve en attente de traitement. L'installation utilisée permet de réaliser un traitement continu avec un débit variable.

Ainsi, selon un mode de réalisation préféré de l'invention, les effluents radifères solides ou comportant des matières en suspension sont envoyés en continu dans des fosses ou cuves de stabilisation placées en parallèle où ils sont maintenus sous agitation ; lorsqu'une fosse ou cuve est remplie, on envoie les effluents dans la suivante, tandis que l'on procède au traitement de stabilisation du radium dans la fosse qui vient d'être remplie, et ainsi de suite ; une fois la stabilisation effectuée dans une fosse ou cuve, le contenu stabilisé en est retiré, de sorte que cette fosse ou cuve est prête pour recevoir de nouveau des effluents à stabiliser.

L'invention va être maintenant décrite plus en détail à l'aide de la description de modes de réalisation de l'invention pris à titre d'exemples non limitatifs.

### EXEMPLE 1 - Traitement de boue radifère

L'installation comporte en parallèle trois fosses de stabilisation d'environ 30 m³ de volume munies d'une agitation permettant d'assurer un mélange homogène du volume d'effluent qu'elles contiennent. Les boues issues de différentes étapes du procédé de traitement du zircon sont acheminées dans la première fosse jusqu'à obtention du volume requis, puis ensuite à la fosse suivante, et ainsi de suite, tandis que le traitement de stabilisation débute dans la première fosse ou fosse précédente.

Dans le présent exemple, les effluents sont des liquides de lavage issus du procédé de séparation du zirconium/hafnium et de la carbochloration du zircon ; et du résidu hafnium issu du procédé de séparation. Nous allons maintenant décrire en détail le traitement d'une fosse où une fois mélangées de manière homogène, ces boues comprenaient :

| | |
|---|---|
| Ra226 : | 4 Bq/kg |
| Ra223 : | 12,1 Bq/kg |
| Ra228 : | 4,6 Bq/kg |

Dans la fosse de stabilisation, ont été ajoutés 40 ml de chlorure de baryum à 150 g/l par m³ d'effluents.

On a agité afin d'assurer une homogénéisation du mélange.

On a ensuite ajouté de 15 à 20 ml d'acide sulfurique à 34% par m³ du mélange précédemment obtenu.

On a agité l'ensemble pour assurer l'homogénéisation du mélange.

Les effluents stabilisés obtenus ont été ensuite dirigés vers une fosse de neutralisation appartenant à un groupe de trois fosses de neutralisation chacune montée en série à la suite d'une fosse de stabilisation.

Après neutralisation par de la soude, on a ajouté un floculant, puis procédé à une décantation avant de filtrer sur filtre-presse. La boue retenue par le filtre ainsi que le filtrat ont été analysés et les résultats suivants ont été obtenus :

| | | |
|---|---|---|
| Filtrat : | Ra226 : | 0,57 Bq/l |
| | Ra223 : | non mesurable |
| | Ra 228 : | < 0,12 Bq/l |
| Boue : | Ra226 : | 84 Bq/kg |
| | Ra223 : | 63,1 Bq/kg |
| | Ra228 : | 35 Bq/kg |

### EXEMPLE 2 - Tests de lixiviation

On a repris la boue obtenue à l'exemple 1 et effectué des tests de lixiviation selon la méthode décrite ci-après :

Description du test: 100 g de résidus (boue) sont mélangés à 1 litre d'eau ou d'acide ou de base. Le mélange est agité pendant une durée déterminée (3 x 16h ou 1 x 24h), puis filtré. Les lixiviats sont analysés (test normalisé NF X 31 210, test de lixiviation, test de relâchement en milieu acide ou basique)

Les résultats sont les suivants :
Tests de lixiviation à l'eau pendant 16 heures :

| | |
|---|---|
| Ra226 : | < 0,1 Bq/l |
| Ra223 : | 2,3 Bq/l |
| Ra228 : | < 0,15 Bq/l |

Tests de lixiviation à l'eau pendant 32 heures :

| | |
|---|---|
| Ra226 : | < 0,4 Bq/l |
| Ra223 : | 0,48 Bq/l |
| Ra228 : | < 0,12 Bq/l |

Tests de lixiviation à l'eau pendant 48 heures :

| | |
|---|---|
| Ra226 : | < 0,5 Bq/l |
| Ra223 : | non mesurable |
| Ra228 : | non mesurable |

Tests de lixiviation 24 heures, pH 9, à la soude :

| | |
|---|---|
| Ra226 : | 0,7 Bq/l |
| Ra223 : | 0,89 Bq/l |
| Ra228 : | < 0,15 Bq/l |

Tests de lixiviation 24 heures, pH 5, HCl :

| | |
|---|---|
| Ra226 : | 4,9 Bq/l |
| Ra223 : | 8 Bq/l |
| Ra228 : | 0,4 ± 0,2 Bq/l |

Tests de lixiviation 24 heures, pH 5, avec H₂SO₄ :

| | |
|---|---|
| Ra226 : | < 0,1 Bq/l |
| Ra223 : | 1,4 Bq/l |
| Ra228 : | < 0,06 Bq/l |

Tests de lixiviation 24 heures avant stabilisation :

| | |
|---|---|
| Ra226 : | 15 Bq/l |
| Ra223 : | 5,36 Bq/l |
| Ra228 : | 3,4 Bq/l |

### EXEMPLE 3 - Traitement de boue radifère

On a reproduit l'exemple 1 sur un mélange d'effluents ou de déchets radifères contenant :

| | |
|---|---|
| Ra226 : | 107 000 Bq/l |
| Ra223 : | 5 205 Bq/kg |
| Ra228 : | 14 500 Bq/kg |

Après stabilisation, on a obtenu les valeurs suivantes :

### Filtrats :

| | |
|---|---|
| Ra226 : | < 0,2 Bq/l |
| Ra223 : | non mesurable |
| Ra228 : | < 0,2 bq/l |
| Boue : | |
| Ra226 : | 65 700 Bq/kg |
| Ra223 : | 2917 Bq/kg |
| Ra228 : | 11 500 Bq/kg |

### EXEMPLE 4 - Tests de lixiviation

On a reproduit les tests de lixiviation sur la boue de filtration obtenue à l'exemple 3:
Tests de lixiviation à l'eau pendant 16 heures :

| | |
|---|---|
| Ra226 : | 0,6 ± 0,3 Bq/l |
| Ra223 : | 2,27 Bq/l |
| Ra228 : | 0,37 Bq/l |

Tests de lixiviation à l'eau pendant 32 heures:

| | |
|---|---|
| Ra226 : | 0,2 ± 0,1 Bq/l |
| Ra223 : | 1,64 Bq/l |
| Ra228 : | < 0,5 Bq/l |

Tests de lixiviation à l'eau pendant 48 heures :

| | |
|---|---|
| Ra226 : | 0,3 ± 0,1 Bq/l |
| Ra223 : | 0,17 Bq/l |
| Ra228 : | 0,09 Bq/l |

Tests de lixiviation pendant 24 heures pH 9, à la soude :

| | |
|---|---|
| Ra226 : | < 0,1 Bq/l |
| Ra223 : | non mesurable |
| Ra228 : | < 0,3 Bq/l |

Tests de lixiviation pendant 24 heures pH 5, avec HCl:

| | |
|---|---|
| Ra226 : | 0,1 ± 0,05 Bq/l |
| Ra223 : | non mesurable |
| Ra228 : | <0,08 Bq/l |

Tests de lixiviation pendant 24 heures pH 5, avec H₂SO₄

| | |
|---|---|
| Ra226 : | 0,2 ± 0,1 Bq/l |
| Ra223 : | non mesurable |
| Ra228 : | < 0,3 Bq/l |

La méthode selon l'invention permet donc de précipiter et piéger le radium dans un effluent solide ou semi-solide de volume réduit par rapport aux effluents initiaux traités. Les tests de lixiviation montrent en outre que le radium s'y trouve concentré sous forme stable si bien que ces effluents solides ou semi-solides peuvent être stockés après une éventuelle élimination totale ou partielle de la phase liquide de l'effluent, dans des conditions acceptables pour l'environnement.

Ces exemples de mise en oeuvre de l'invention ne doivent pas conduire à considérer l'invention de manière restrictive. Il est bien évident que la méthode peut être adaptée dans le choix des réactifs, des moyens d'homogénéisation, des temps d'incubation et être appliquée à d'autres effluents radifères solides ou comportant des matières en suspension.

## Revendications

1. Méthode de stabilisation du radium présent dans un effluent radifère solide ou comportant des matières en suspension, dans laquelle on procède au mélange de l'effluent et d'un chlorure de métal, puis on fait réagir le mélange précédemment obtenu avec un ion sulfate, pour l'obtention d'un effluent contenant du radium stabilisé.

2. Méthode selon la revendication 1, **caractérisée en ce que** l'effluent radifère est liquide et comprend de 5 à 70 g/L, plus particulièrement de 5 à 50 g/L de matière en suspension.

3. Méthode selon la revendication 1, **caractérisée en ce que** l'effluent est semi-solide ou constitue une boue radifère et comporte de 70 à 300 g/L, plus particulièrement de 150 à 300 g/L, de matière en suspension.

4. Méthode selon la revendication 1, **caractérisée en ce que** l'effluent radifère est solide.

5. Méthode selon l'une quelconque des revendications précédentes **caractérisée en ce que** le rapport molaire entre le chlorure de métal soit l'ion métallique et l'ion sulfate est voisin de 1

6. Méthode selon l'une quelconque des revendications précédentes, **caractérisée en ce que** la méthode ne comporte pas d'étape d'élimination des particules solides avant de procéder au mélange avec un chlorure de métal.

7. Méthode selon l'une quelconque des revendications précédentes, **caractérisée en ce que** le chlorure ainsi que les ions sulfates sont en excès par rapport au radium.

8. Méthode selon l'une quelconque des revendications précédentes, **caractérisée en ce que** le chlorure est un chlorure de baryum, de strontium ou de plomb.

9. Méthode selon l'une des revendications précédentes, **caractérisée en ce que** l'ion sulfate est apporté par l'addition d'acide sulfurique, d'anhydride sulfurique, de sulfate soluble ou de sel de sulfate soluble.

10. Méthode selon la revendication 9, **caractérisée en ce que** l'ion sulfate est apporté par une solution aqueuse d'acide sulfurique de concentration comprise entre 20 et 50 % en poids.

11. Méthode selon la revendication 9, **caractérisée en ce que** l'ion sulfate est apporté par une solution aqueuse d'acide sulfurique à une concentration supérieure ou égale à 90% en poids.

12. Méthode selon l'une des revendications précédentes, **caractérisée en ce que** l'effluent contenant du radium stabilisé est neutralisé.

13. Méthode selon la revendication 12, **caractérisée en ce que** la neutralisation est effectuée à l'aide de soude ou de potasse.

14. Méthode selon la revendication 12, **caractérisée en ce que** l'on neutralise à l'aide d'une solution de soude de concentration comprise entre 10 et 50 %.

15. Méthode selon l'une des revendications 12 à 14, **caractérisée en ce que** l'on ajuste le pH à une valeur comprise entre 7 et 10, de préférence entre 8 et 9.

16. Méthode selon l'une des revendications 12 à 15, **caractérisée en ce que**, avec la neutralisation, l'on précipite des ou les autres métaux présents dans l'effluent.

17. Méthode selon l'une des revendications précédentes, **caractérisée en ce que** l'on réalise une floculation de l'effluent neutralisé, par ajout d'un agent floculant.

18. Méthode selon la revendication 17, **caractérisée en ce que** le floculat issu de l'étape précédente est traité par décantation ou filtration pour recueillir d'un côté un résidu solide contenant le radium stabilisé et de l'autre, la phase liquide de l'effluent, dépourvue ou appauvrie en radium.

19. Méthode selon la revendication 18, **caractérisée en ce que** la filtration est réalisée sur un filtre-presse ou un filtre rotatif.

20. Méthode selon l'une des revendications précédentes, **caractérisée en ce que**, avant l'ajout du chlorure ou d'ion sulfate, l'effluent est soumis à un traitement aux ultrasons.

21. Méthode selon l'une des revendications précédentes, **caractérisée en ce que** la méthode est appliquée au traitement d'effluents radifères solides ou comportant des matières en suspension produits au cours de la métallurgie ou de la chimie du zirconium.

22. Méthode selon la revendication 21, **caractérisée en ce que** l'effluent radifère est issu :
- des dissolutions ou des lavages des matériels employés lors de la carbochloration du minerai de zirconium,
- des boues issues de ce procédé de carbochloration,
- des dissolutions ou des lavages des matériels employés lors du procédé d'extraction et de séparation du zirconium ou de l'hafnium,
- des boues issues de ce procédé d'extraction et de séparation du zirconium ou de l'hafnium, ou
- d'un mélange d'un ou plusieurs de ces effluents.

23. Méthode selon l'une des revendications précédentes, **caractérisée en ce que** les effluents solides ou comportant des matières en suspension sont envoyés en continu dans des fosses ou cuves de stabilisation montées en parallèle où ils sont maintenus sous agitation ; lorsqu'une fosse ou cuve est remplie, on envoie les effluents dans la suivante, tandis que l'on procède au traitement de stabilisation du radium dans la fosse qui vient d'être remplie, et ainsi de suite ; **en ce qu'**une fois la stabilisation effectuée dans une fosse ou cuve, le contenu stabilisé en est retiré, de sorte que cette fosse ou cuve est prête pour recevoir de nouveau des effluents à stabiliser.

## Patentansprüche

1. Verfahren zur Stabilisierung von Radium in radiumhaltigen Feststoffabfällen oder Schwebstoffe enthaltenden Abfällen, bei dem der Abfall und ein Metallchlorid gemischt werden, dann die vorher erhaltene Mischung mit sulfationen reagieren gelassen wird für den Erhalt eines Abfalls, der stabilisiertes Radium enthält.

2. Verfahren nach Anspruch 1, **dadurch gekennzeichnet, dass** der radiumhaltige Abfall flüssig ist und 5 bis 70 g/L, insbesondere 5 bis 50 g/L an Schwebstoffen umfasst.

3. Verfahren nach Anspruch 1, **dadurch gekennzeichnet, dass** der Abfall halbfest ist oder einen radiumhaltigen Schlamm bildet und 70 bis 300 g/L, insbesondere 150 bis 300 g/L Schwebstoffe enthält.

4. Verfahren nach Anspruch 1, **dadurch gekennzeichnet, dass** der radiumhaltige Abfall ein Feststoff ist.

5. Verfahren nach einem beliebigen der vorhergehenden Ansprüche, **dadurch gekennzeichnet, dass** das Molverhältnis zwischen dem Metallchlorid, das heißt den Metallionen, und den Sulfationen nahe 1 ist.

6. Verfahren nach einem beliebigen der vorhergehenden Ansprüche, **dadurch gekennzeichnet, dass** das Verfahren nicht den Schritt des Eliminierens von Feststoffpartikeln vor dem Durchführen der Mischung mit einem Metallchlorid enthält.

7. Verfahren nach einem beliebigen der vorhergehenden Ansprüche, **dadurch gekennzeichnet, dass** das Chlorid ebenso wie die Sulfationen im Überschuss zu dem Radium vorliegen.

8. Verfahren nach einem beliebigen der vorhergehenden Ansprüche, **dadurch gekennzeichnet, dass** das Chlorid ein Bariumchlorid, ein Strontiumchlorid oder ein Bleichlorid ist.

9. Verfahren nach einem der vorhergehenden Ansprüche, **dadurch gekennzeichnet, dass** die Sulfationen durch Addition von Schwefelsäure, Schwefelsäureanhydrid, löslichem Sulfat oder Salz des löslichen Sulfats zugeführt wird.

10. Verfahren nach Anspruch 9, **dadurch gekennzeichnet, dass** die Sulfationen durch eine wässrige Schwefelsäurelösung mit einer Konzentration zwischen 20 und 50 Gew.-% zugeführt werden.

11. Verfahren nach Anspruch 9, **dadurch gekennzeichnet, dass** die Sulfationen durch eine wässrige Schwefelsäurelösung mit einer Konzentration größer oder gleich 90 Gew.-% zugeführt werden.

12. Verfahren nach einem der vorhergehenden Ansprüche, **dadurch gekennzeichnet, dass** der das stabilisierte Radium enthaltende Abfall neutralisiert wird.

13. Verfahren nach Anspruch 12, **dadurch gekennzeichnet, dass** die Neutralisierung mithilfe von Natron oder Kali durchgeführt wird.

14. Verfahren nach Anspruch 12, **dadurch gekennzeichnet, dass** die Neutralisierung mithilfe einer Natronlösung mit einer Konzentration zwischen 10 und 50 % durchgeführt wird.

15. Verfahren nach einem der Ansprüche 12 bis 14, **dadurch gekennzeichnet, dass** der pH-Wert auf einen Wert zwischen 7 und 10, vorzugsweise zwischen 8 und 9 eingestellt wird.

16. Verfahren nach einem der Ansprüche 12 bis 15, **dadurch gekennzeichnet, dass** mit der Neutralisierung andere oder die anderen in dem Abfall vorhandenen Metalle ausgefällt werden.

17. Verfahren nach einem der vorhergehenden Ansprüche, **dadurch gekennzeichnet, dass** eine Ausflockung des neutralisierten Abfalls durch das Hinzufügen eines Flockungsmittels realisiert wird.

18. Verfahren nach Anspruch 17, **dadurch gekennzeichnet, dass** der bei dem vorhergehenden Schritt entstandene Niederschlag durch Dekantieren oder Filtrierung behandelt wird, um einerseits einen Festrückstand, der das stabilisierte Radium enthält, und andererseits die flüssige Phase des Abfalls, die kein Radium oder abgereichertes Radium enthält, zu erhalten.

19. Verfahren nach Anspruch 18, **dadurch gekennzeichnet, dass** die Filtrierung mittels einer Filterpresse oder eines rotierenden Filters realisiert wird.

20. Verfahren nach einem der vorhergehenden Ansprüche, **dadurch gekennzeichnet, dass** vor dem Zusetzen von Chlorid oder Sulfationen der Abfall einer Ultraschallbehandlung unterzogen wird.

21. Verfahren nach einem der vorhergehenden Ansprüche, **dadurch gekennzeichnet, dass** das Verfahren zur Behandlung von radiumhaltigen Feststoffabfällen oder Schwebstoffe enthaltenden Abfällen angewandt wird, die während der Metallurgie oder der Zirkoniumchemie erzeugt werden.

22. Verfahren nach Anspruch 21, **dadurch gekennzeichnet, dass** der radiumhaltige Abfall erhalten wird aus:
- Lösungen oder Waschungen von Materialien, die bei der Carbochlorierung des Zirkoniumminerals verwendet werden,
- in diesem Verfahren der Carbochlorierung erhaltenen Schlämmen,
- Lösungen oder Waschungen von Materialien, die bei dem Extrahier- und Trennverfahren des Zirkoniums oder des Hafniums verwendet werden,
- bei diesem Extrahier- und Trennverfahren des Zirkoniums oder des Hafniums erhaltenen Schlämmen oder
- einer Mischung eines oder mehrerer dieser Abfälle.

23. Verfahren nach einem der vorhergehenden Ansprüche, **dadurch gekennzeichnet, dass** die Festabfälle oder Schwebstoffe enthaltenden Abfälle kontinuierlich in Stabilisierungstanks oder -wannen geschickt werden, die parallel angeordnet sind, in denen sie unter Rühren gehalten werden; wenn ein Tank oder eine Wanne gefüllt ist, die Abfälle in die folgende befördert werden, wobei die Behandlung der Stabilisierung des Radiums in dem Tank, der gerade gefüllt wurde, durchgeführt wird, und so weiter; dass, sobald die Stabilisierung in einem Tank oder einer Wanne ausgeführt ist, der stabilisierte Inhalt abgezogen wird, so dass dieser Tank oder diese Wanne bereit ist, von neuem zu stabilisierende Abfälle aufzunehmen.

## Claims

1. Method for stabilizing the radium present in a solid radium-containing effluent or in a radium-containing effluent containing substances in suspension, in which the effluent and a metal chloride are mixed and then the mixture previously obtained is reacted with a sulfate ion to give an effluent containing stabilized radium.

2. Method according to claim 1, **characterized in that** the radium-containing effluent is liquid and contains from 5 to 70 g/l, more particularly from 5 to 50 g/l, of substances in suspension.

3. Method according to claim 1, **characterized in that** the effluent is semisolid or constitutes a radium-containing sludge and contains from 70 to 300 g/l, more particularly from 150 to 300 g/l, of substances in suspension.

4. Method according to claim 1, **characterized in that** the radium-containing effluent is solid.

5. Method according to any one of the preceding claims, **characterized in that** the molar ratio between the metal chloride, that is to say the metal ion, and the sulfate ion is close to 1.

6. Method according to any one of the preceding claims, **characterized in that** the method does not include a step of removing the solid particles prior to mixing with a metal chloride.

7. Method according to any one of the preceding claims, **characterized in that** the chloride and the sulfate ions are in excess relative to the radium.

8. Method according to any one of the preceding claims, **characterized in that** the chloride is a barium, strontium or lead chloride.

9. Method according to any one of the preceding claims, **characterized in that** the sulfate ion is supplied by the addition of sulfuric acid, sulfuric anhydride, soluble sulfate or soluble sulfate salt.

10. Method according to claim 9, **characterized in that** the sulfate ion is supplied by an aqueous sulfuric acid solution having a concentration of from 20 to 50 % by weight.

11. Method according to claim 9, **characterized in that** the sulfate ion is supplied by an aqueous sulfuric acid solution having a concentration greater than or equal to 90 % by weight.

12. Method according to any one of the preceding claims, **characterized in that** the effluent containing stabilized radium is neutralized.

13. Method according to claim 12, **characterized in that** neutralization is carried out with the aid of sodium hydroxide or potassium hydroxide.

14. Method according to claim 12, **characterized in that** neutralization is carried out with the aid of a sodium hydroxide solution having a concentration of from 10 to 50 %.

15. Method according to any one of claims 12 to 14, **characterized in that** the pH is adjusted to a value of from 7 to 10, preferably from 8 to 9.

16. Method according to any one of claims 12 to 15, **characterized in that**, with the neutralization, some of or the other metals present in the effluent are precipitated.

17. Method according to any one of the preceding claims, **characterized in that** flocculation of the neutralized effluent is effected by adding a flocculating agent.

18. Method according to claim 17, **characterized in that** the flocculate from the preceding step is treated by decantation or filtration in order to recover on the one hand a solid residue containing the stabilized radium and on the other hand the liquid phase of the effluent, devoid or depleted of radium.

19. Method according to claim 18, **characterized in that** filtration is carried out on a filter press or a rotary filter.

20. Method according to any one of the preceding claims, **characterized in that**, before the chloride or sulfate ion is added, the effluent is subjected to ultrasound treatment.

21. Method according to any one of the preceding claims, **characterized in that** the method is applied to the treatment of solid radium-containing effluents or radium-containing effluents containing substances in suspension that have been produced during zirconium metallurgy or chemistry.

22. Method according to claim 21, **characterized in that** the radium-containing effluent is from:
- dissolutions or washings of the equipment employed in the carbochlorination of zirconium mineral,
- sludges from that carbochlorination process,
- dissolutions or washings of the equipment employed in the process of extraction and separation of zirconium or hafnium,
- sludges from that process of extraction and separation of zirconium or hafnium, or
- a mixture of one or more of those effluents.

23. Method according to any one of the preceding claims, **characterized in that** the solid effluents or effluents containing substances in suspension are sent continuously to stabilization pits or tanks mounted in parallel, in which they are agitated constantly; when a pit or tank is full, the effluents are sent to the following pit or tank while radium stabilization treatment is carried out in the pit which has just been filled, and so on; **in that**, once stabilization has been carried out in a pit or tank, the stabilized contents are removed therefrom so that the pit or tank is ready to receive effluents for stabilization again.
